# EUROPEAN PATENT APPLICATION

(11) **EP 4 546 655 A1**
(43) Date of publication of application: **30.04.2025**
(21) Application number: 23826255.4
(22) Date of filing: 15.06.2023
(51) Int. Cl.: H04B 5/00

(54) **ELECTRONIC DEVICE**

(30) Priority: 21.06.2022 CN 202210702513
(71) Applicant: Vivo Mobile Communication Co., Ltd., Dongguan, Guangdong 523863 (CN)
(72) Inventor: QIN, Yuan, Dongguan, Guangdong 523863 (CN)
(74) Representative: Lavoix
(86) International application number: PCT/CN2023/100338
(87) International publication number: WO 2023/246606

(57) **Abstract**

This application discloses an electronic device, and relates to the field of communication technologies. The electronic device includes a device body, a coil, and a magnetic conductive member. The coil and the magnetic conductive member are both disposed on the device body. The magnetic conductive member includes a first magnetic conductive portion and a second magnetic conductive portion that are connected. An orthographic projection of the first magnetic conductive portion at least partially overlaps with an orthographic projection of the coil in a direction of a center line of the coil. The second magnetic conductive portion extends out relative to an outermost circle of the coil.

## Description

### CROSS-REFERENCE TO RELATED APPLICATIONS

The present invention claims priority to Chinese Patent Application No. 202210702513.1, entitled "ELECTRONIC DEVICE" and filed with the China National Intellectual Property Administration on June 21, 2022, which is incorporated herein by reference in its entirety.

### TECHNICAL FIELD

This application relates to the field of communication technologies, and specifically, to an electronic device.

### BACKGROUND

Currently, Near Field Communication (Near Field Communication, NFC) technology has been widely used in an electronic device, for example, a mobile phone. An NFC function of the mobile phone may serve as a bus card, an entrance guard card, a meal card, or the like, making daily life of a user more convenient.

When a master device and a slave device communicate through NFC, an active coil in the master device is energized to generate a magnetic field, and a passive coil in the slave device is placed in the magnetic field and excited to generate an induction current to drive the slave device to operate, so that a communication connection between the master device and the slave device is implemented.

A mobile phone and a bus card reader are used as an example. The mobile phone is the master device, the bus card reader is the slave device, and the bus card reader can identify bus card information in the mobile phone. However, when the user taps the card while holding the mobile phone, the mobile phone is usually inclined relative to the bus card reader, that is, the mobile phone does not completely conform to the bus card reader, not only causing an active coil of the mobile phone to be far away from a passive coil of the bus card reader, but also making it impossible for the passive coil to be perpendicular to a magnetic field of the active coil. In addition, an effective magnetic field induced by the passive coil is a magnetic field generated in a direction perpendicular to the passive coil when the active coil is energized. Therefore, the magnetic field induced by the passive coil weakens, and the induction current decreases, making it likely that the bus card reader cannot be driven to operate. Then the bus card reader cannot read the bus card information in the mobile phone, that is, the communication connection between the master device and the slave device cannot be implemented.

### SUMMARY

An objective of embodiments of this application is to provide an electronic device that can resolve a problem in the related art that a master device and a slave device cannot communicate because the master device and the slave device are relatively inclined.

The embodiments of this application provide an electronic device, including a device body, a coil, and a magnetic conductive member. The coil and the magnetic conductive member are both disposed on the device body. The magnetic conductive member includes a first magnetic conductive portion and a second magnetic conductive portion that are connected. An orthographic projection of the first magnetic conductive portion at least partially overlaps with an orthographic projection of the coil in a direction of a center line of the coil. The second magnetic conductive portion extends out relative to an outermost circle of the coil.

In the embodiments of this application, the coil can generate a magnetic field when energized, the magnetic field inside the coil is relatively strong, and the magnetic field outside the coil is relatively weak. The magnetic field can be guided by the magnetic conductive member. Because the orthographic projection of the first magnetic conductive portion at least partially overlaps with the orthographic projection of the coil in the direction of the center line of the coil, and the second magnetic conductive portion extends out relative to the outermost circle of the coil, the magnetic field inside the coil can be guided to the outside of the coil by the first magnetic conductive portion and the second magnetic conductive portion. The guided magnetic field forms a large magnetic field region in a region corresponding to the magnetic conductive member. Because a magnetic field strength inside the coil is large, a magnetic field strength of the magnetic field region formed after magnetic conduction is also large. In addition, because magnetic lines are in a closed state, a magnetic field direction inside the coil is not completely perpendicular to the coil. In this case, the magnetic field direction in the magnetic field region formed after magnetic conduction is also not perpendicular to the coil, that is, the magnetic field direction is inclined relative to the coil.

In this way, under the effect of the magnetic conductive member, a magnetic field region in which the magnetic field strength is large and the magnetic field direction is inclined relative to the coil is formed in the electronic device. Therefore, when the electronic device is close to an external device, even if the electronic device and the external device are relatively inclined, an induction coil of the external device can be exactly perpendicular to the inclined magnetic field in the magnetic field region, so that the induction coil effectively induces the magnetic field in the magnetic field region, and an induction current of the induction coil is increased, causing the external device to operate, to implement a communication connection between the electronic device and the external device. Therefore, after the magnetic conductive member is added, even if the electronic device and the external device are relatively inclined, a reliable communication connection between the electronic device and the external device can be ensured.

### BRIEF DESCRIPTION OF THE DRAWINGS

FIG. 1 is a schematic diagram of communication between a master device and a slave device in the related art;
FIG. 2 is a schematic diagram of communication between a master device and a slave device according to an embodiment of the application;
FIG. 3 is a schematic exploded view of an electronic device according to an embodiment of this application;
FIG. 4 is a schematic structural diagram of an electronic device according to an embodiment of this application;
FIG. 5 is a schematic structural diagram of a magnetic conductive member and a coil according to an embodiment of this application;
FIG. 6 is a schematic diagram of magnetic field distribution of the coil in FIG. 5.
FIG. 7 is a schematic structural diagram of a coil and a magnetic conductive member according to another embodiment of this application;
FIG. 8 is a schematic diagram of magnetic field distribution of the coil in FIG. 7;
FIG. 9 is a schematic structural diagram of a coil and a magnetic conductive member according to still another embodiment of this application;
FIG. 10 is a schematic diagram of magnetic field distribution of the coil in FIG. 9;
FIG. 11 is a schematic structural diagram of a magnetic conductive member and a coil according to yet another embodiment of this application;
FIG. 12 is a schematic diagram of magnetic field distribution of the coil in FIG. 11;
FIG. 13 is a schematic structural diagram of a coil disclosed in the related art;
FIG. 14 is a schematic diagram of an impedance of a coil before a passive coil is loaded disclosed in the related art;
FIG. 15 is a schematic diagram of a coil in a communication connection with a passive coil disclosed in the related art;
FIG. 16 is a schematic diagram of an impedance of a coil in a communication connection with a passive coil disclosed in the related art;
FIG. 17 is a schematic structural diagram of a coil and a magnetic conductive member according to an embodiment of this application;
FIG. 18 is a schematic diagram of an impedance of a coil before a passive coil is loaded according to an embodiment of this application;
FIG. 19 is a schematic diagram of a coil in a communication connection with a passive coil according to an embodiment of this application; and
FIG. 20 is a schematic diagram of an impedance of a coil in a communication connection with a passive coil according to an embodiment of this application.

### Reference numerals:

100-device body;
200-coil; 210-hollow region;
300-magnetic conductive member; 310-first magnetic conductive member; 320-second magnetic conductive member; 330-gap; a-first magnetic conductive portion; b-second magnetic conductive portion; c-protrusion portion;
400-substrate;
500-shielding member;
600-camera;
700-external device; 710-passive coil;
800-inclined magnetic field region;
900-reversed magnetic field region.

### DETAILED DESCRIPTION

The following clearly describes the technical solutions in embodiments of this application with reference to the accompanying drawings in the embodiments of this application. It is clear that, the described embodiments are some of embodiments of this application rather than all of the embodiments. All other embodiments obtained by a person of ordinary skill in the art based on embodiments of this application shall fall within the protection scope of this application.

The terms "first", "second", and the like in the specification and claims of this application are used to distinguish between similar objects, but are not used to describe a specific sequence or order. It may be understood that the data used in such a way are interchangeable in proper circumstances, so that embodiments of this application can be implemented in sequences other than the sequence illustrated or described herein. Objects distinguished by using "first" and "second" are generally of one class, and a quantity of the objects are not limited. For example, there may be one or more first objects. In addition, "and/or" in the specification and the claims represents at least one of connected objects, and the character "/" generally represents an "or" relationship between associated objects.

With reference to the accompanying drawings, the following provides detailed descriptions of an electronic device provided in the embodiments of this application by using specific embodiments and application scenarios thereof.

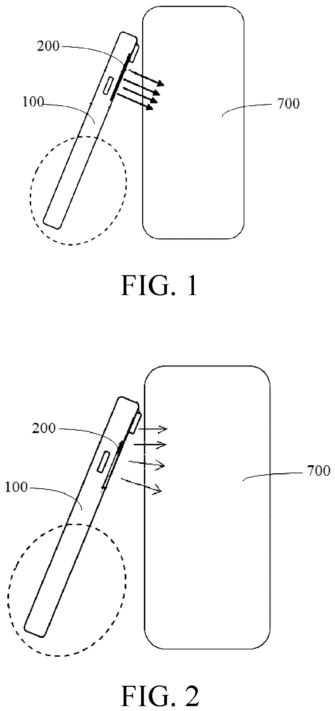

Referring to FIG. 1 to FIG. 20, the embodiments of this application disclose an electronic device. The electronic device includes a device body 100, a coil 200, and a magnetic conductive member 300. The device body 100 serves as a mounting base for the coil 200 and the magnetic conductive member 300. The coil 200 may generate a magnetic field when energized, and a passive coil 710 of an external device 700 can generate an induction current under excitation of the magnetic field, so that the electronic device implements near field communication with the external device 700. The electronic device may be a mobile phone, and the electronic device may have a hand holding region (as a dashed box shown in FIG. 1 and FIG. 2).

Both the coil 200 and the magnetic conductive member 300 are disposed on the device body 100. The magnetic conductive member 300 includes a first magnetic conductive portion a and a second magnetic conductive portion b that are connected. Optionally, the first magnetic conductive portion a and the second magnetic conductive portion b may be a split forming structure, or an integrally formed structure. In a direction of a center line of the coil 200, an orthographic projection of the first magnetic conductive portion a at least partially overlaps with an orthographic projection of the coil 200, and the second magnetic conductive portion b extends out relative to an outermost circle of the coil 200. In other words, at least a part of the first magnetic conductive portion a is opposite to the coil 200 in the direction of the center line of the coil 200. Optionally, the orthographic projection of the first magnetic conductive portion a may completely overlap with the orthographic projection of the coil 200. Alternatively, a part of the orthographic projection of the first magnetic conductive portion a may overlap with the entire orthographic projection of the coil 200. Certainly, a part of the orthographic projection of the first magnetic conductive portion a may also overlap with a part of the orthographic projection of the coil 200. The direction of the center line of the coil 200 is perpendicular to a plane at which the coil 200 is located.

It should be noted that, the second magnetic conductive portion b extends out relative to the outermost circle of the coil 200, and an extension length of the second magnetic conductive portion b may be greater than a first preset value, to ensure to formed a large inclined magnetic field region 800, and avoid the inclined magnetic field region 800 to be excessively small. Optionally, the first preset value may be 5 mm. In addition, the extension length of the second magnetic conductive portion b may also be less than a second preset value, and the second preset value is greater than the first preset value, to avoid the formed inclined magnetic field region 800 to be excessively large. Guiding a limited magnetic field into the large inclined magnetic field region 800 may weaken the magnetic field in a region where effective communication can be performed, which does not facilitate a communication connection between the electronic device and the external device 700.

The coil 200 can generate the magnetic field when energized, the magnetic field inside the coil 200 is strong, and the magnetic field outside the coil 200 is weak. The magnetic field can be guided by the magnetic conductive member 300. Because the orthographic projection of the first magnetic conductive portion a at least partially overlaps with the orthographic projection of the coil 200 in the direction of the center line of the coil 200, and the second magnetic conductive portion b extends out relative to the outermost circle of the coil 200, the magnetic field inside the coil 200 can be guided to the outside of the coil 200 by the first magnetic conductive portion a and the second magnetic conductive portion b. The guided magnetic field forms a large magnetic field region in a region corresponding to the magnetic conductive member 300. Because a magnetic field strength inside the coil 200 is large, a magnetic field strength of the magnetic field region formed after magnetic conduction is also large. In addition, because magnetic lines are in a closed state, a magnetic field direction inside the coil 200 is not completely perpendicular to the coil 200. In this case, the magnetic field direction in the magnetic field region formed after magnetic conduction is also not perpendicular to the coil 200, that is, the magnetic field direction is inclined relative to the coil 200. The region is the inclined magnetic field region 800.

In this way, under the effect of the magnetic conductive member 300, a magnetic field region in which the magnetic field strength is large and the magnetic field direction is inclined relative to the coil 200 is formed in the electronic device. Therefore, when the electronic device is close to the external device 700, even if the electronic device and the external device 700 are relatively inclined, a passive coil 710 of the external device 700 can be exactly perpendicular to the inclined magnetic field in the magnetic field region, so that the passive coil 710 effectively induces the magnetic field in the magnetic field region, and an induction current of the passive coil 710 is increased, causing the external device 700 to operate, to implement the communication connection between the electronic device and the external device 700. Therefore, after the magnetic conductive member 300 is added, even if the electronic device and the external device 700 are relatively inclined, a reliable communication connection between the electronic device and the external device 700 can be ensured.

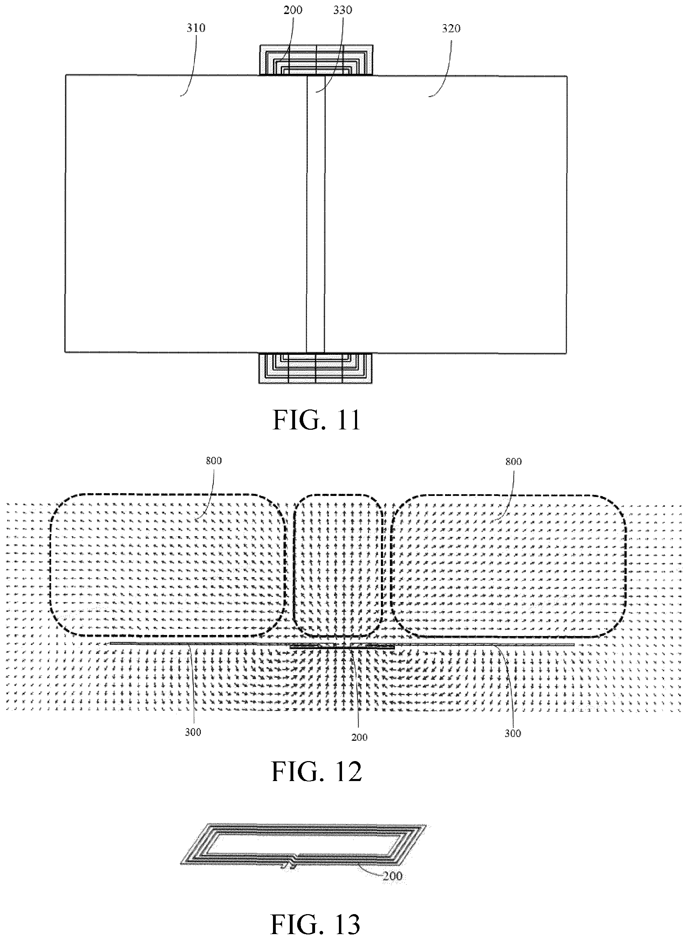

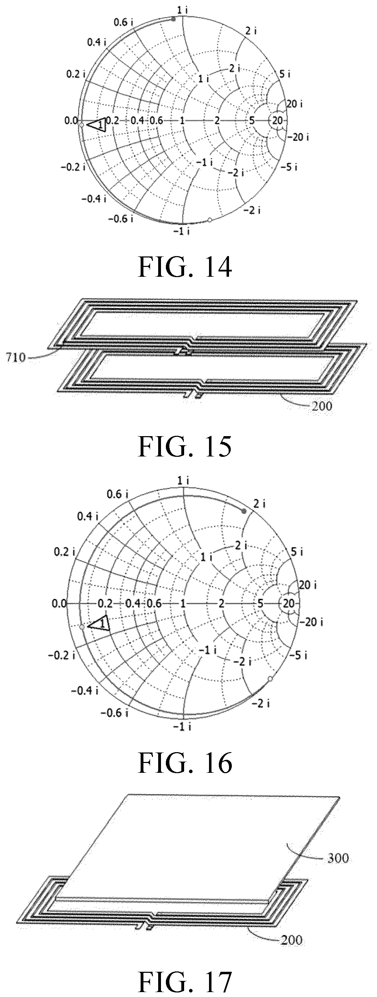

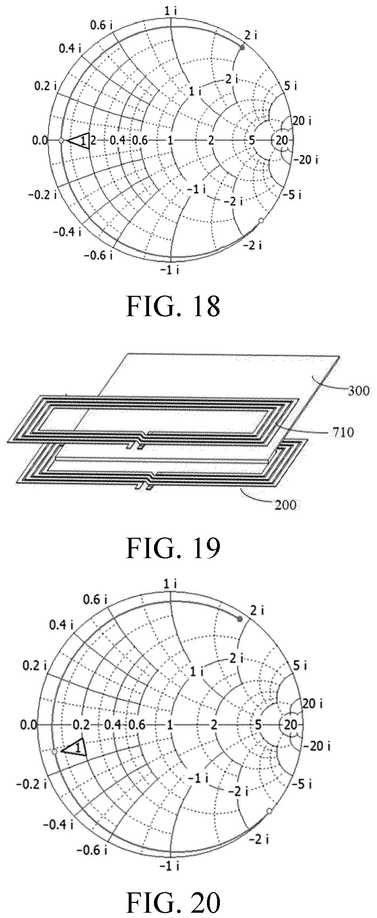

FIG. 14 and FIG. 16 respectively show schematic diagrams of impedance changes of a coil 200 before and after loading a load disclosed in the related art. FIG. 18 and FIG. 20 respectively show schematic diagrams of impedance changes of a coil 200 before and after loading a load according to an embodiment of this application. Loading a load refers to a situation in which the electronic device is in a communication connection with the external device 700, that is, a situation in which the coil 200 communicates with the passive coil 710 of the external device 700 according to the present disclosure. Before the load is loaded, an impedance of the coil 200 matches an impedance of an excitation source of the device body 100. In addition, after the load is loaded, the impedance of the coil 200 changes, so that the impedance of the coil 200 does not match the impedance of the excitation source, which reduces operation performance of the electronic device. It can be learned from FIG. 13 to FIG. 20 that, in the related art, no magnetic conductive member 300 is added, and the impedance changes of the coil 200 before and after loading the load are large. However, in this application, the magnetic conductive member 300 is added, the impedance changes of the coil 200 before and after loading the load are small, and impedance stability is improved. In this way, an excessive mismatch between the impedance of the coil 200 and the impedance of the excitation source of the device body 100 during near field communication is avoided, so that the operation performance of the electronic device is ensured to some extent.

In this embodiment, the magnetic conductive member 300 may be ferrite. Optionally, the magnetic conductive member 300 is a sheet structure, and the sheet structure intersects the plane at which the coil 200 is located. In this way, because the magnetic conductive member 300 is inclined relative to the coil 200, the inclined magnetic field region 800 formed after magnetic conduction of the magnetic conductive member 300 is small, which does not facilitate the communication connection between the electronic device and the external device 700. Therefore, in an embodiment, the sheet structure is parallel to the plane at which the coil 200 is located. The inclined magnetic field region 800 formed after magnetic conduction of the magnetic conductive member 300 is large. Requirements for the relative position between the electronic device and the external device 700 in a communication state are reduced, which facilitates the communication connection between the electronic device and the external device 700.

In an optional embodiment, the first magnetic conductive portion a is not in contact with the coil 200. Because the magnetic field at a position of the coil 200 is strong, the magnetic field at a position farther away from the coil 200 is weaker, and there is a specific distance between the first magnetic conductive portion a and the coil 200, the magnetic conductive member 300 cannot guide the magnetic field at the position of the coil 200, but guides the weak magnetic field at the position far away from the coil 200. Therefore, the magnetic field of the finally formed inclined magnetic field region 800 is also weak, which does not facilitate the communication connection between the electronic device and the external device 700. Therefore, in an embodiment, the first magnetic conductive portion a is in contact with the coil 200. In this way, the magnetic conductive member 300 can guide the strong magnetic field at the position of the coil 200, and the magnetic field of the finally formed inclined magnetic field region 800 is also strong, which facilitates the communication connection between the electronic device and the external device 700.

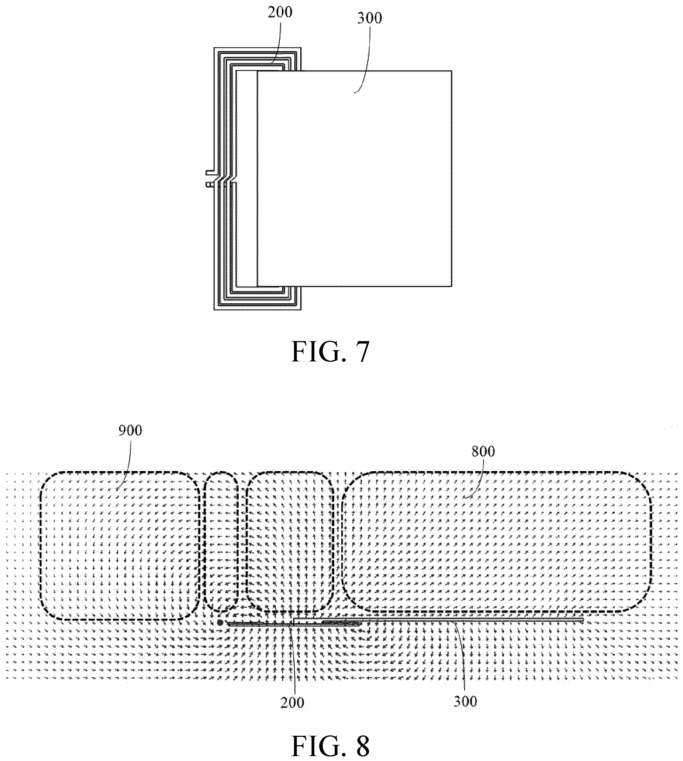

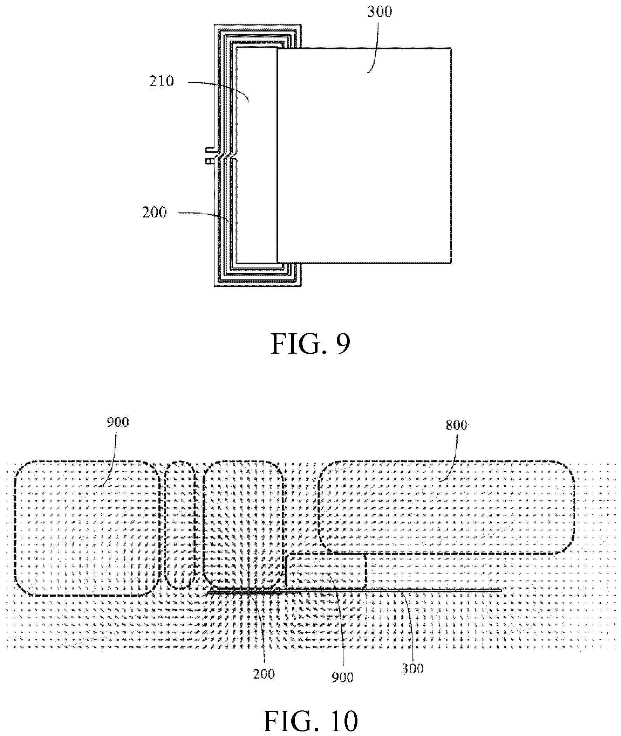

In an optional embodiment, as shown in FIG. 9, an innermost circle of the coil 200 encloses a hollow region 210. In the direction of the center line of the coil 200, the orthographic projection of the first magnetic conductive portion a does not overlap with an orthographic projection of the hollow region 210. In this case, the magnetic field guided by the first magnetic conductive portion a is limited to a magnetic field in a region opposite to the coil 200, and the magnetic field in the region is weaker than the magnetic field in a central region of the coil 200. Therefore, the magnetic field of the finally formed inclined magnetic field region 800 is weak. In addition, the inclined magnetic field region 800 is easily affected by a reverse magnetic field region 900 outside the coil 200, causing the inclined magnetic field region 800 to be small, which does not facilitate the communication connection between the electronic device and the external device 700. Therefore, in an embodiment, as shown in FIG. 7, in the direction of the center line of the coil 200, the orthographic projection of the first magnetic conductive portion a is at least partially located in the orthographic projection of the hollow region 210. In other words, a part of the orthographic projection of the first magnetic conductive portion a is located in the orthographic projection of the coil 200, and another part of the orthographic projection of the first magnetic conductive portion a is located in the orthographic projection of the hollow region 210. The hollow region 210 is the central region of the coil 200. Therefore, the first magnetic conductive portion a can guide the magnetic field in the hollow region 210, and the magnetic field of the finally formed inclined magnetic field region 800 is strong. In addition, impact of the reverse magnetic field region 900 outside the coil 200 on the inclined magnetic field region 800 is avoided, and the inclined magnetic field region 800 is enlarged, which facilitates the communication connection between the electronic device and the external device 700.

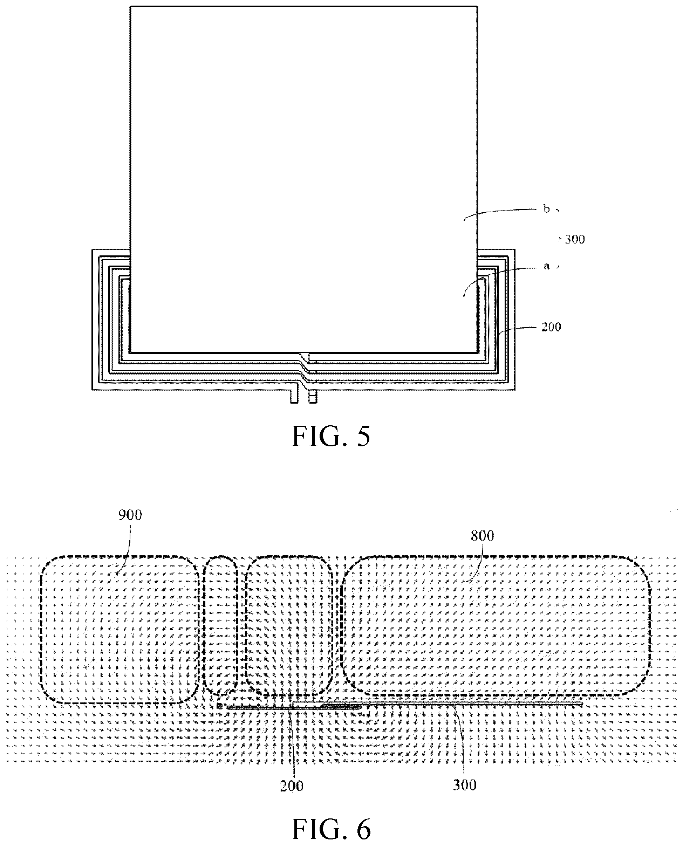

Optionally, in the direction of the center line of the coil 200, as shown in FIG. 5, the orthographic projection of the hollow region 210 may be located in the orthographic projection of the first magnetic conductive portion a, or as shown in FIG. 7, a part of the orthographic projection of the hollow region 210 may be located in the orthographic projection of the first magnetic conductive portion a.

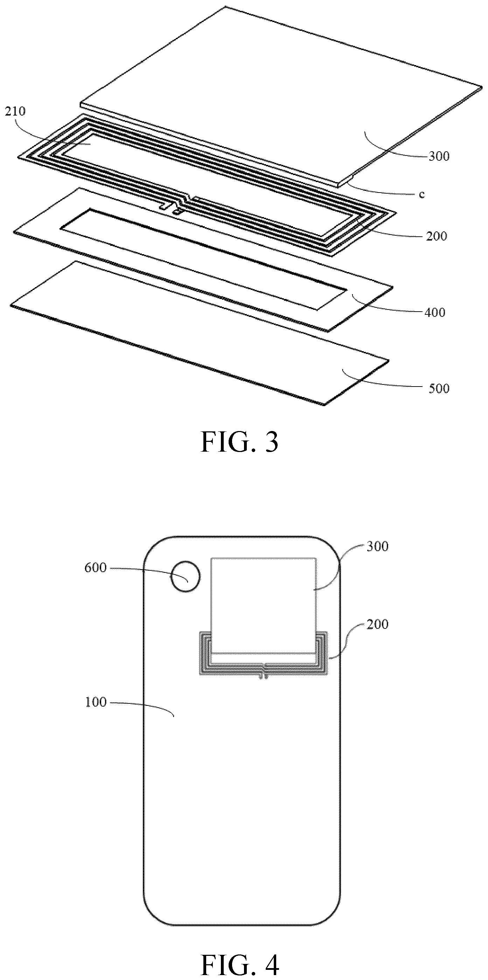

In this solution, as shown in FIG. 3, a first magnetic conductive portion a is provided with a protrusion portion c, and the protrusion portion c extends into the hollow region 210. Specifically, the protrusion portion c is provided on one side of the first magnetic conductive portion a that faces the coil 200. Optionally, the protrusion portion c and the first magnetic conductive portion a are an integrally formed structure. The protrusion portion c may be ferrite, and has a magnetic conductive effect. The protrusion portion c may cooperate with the innermost circle of the coil 200, that is, the protrusion portion c is embedded in the hollow region 210. Certainly, the protrusion portion c may alternatively not cooperate with the innermost circle of the coil 200. A structure of the protrusion portion c is not limited herein. Because the first magnetic conductive portion a extends into the hollow region 210 through the protrusion portion c, the first magnetic conductive portion a can guide a strong magnetic field at a central position of the hollow region 210, to further increase the magnetic field strength of the formed inclined magnetic field region 800, which facilitates the communication connection between the electronic device and the external device 700.

In an optional embodiment, one magnetic conductive member 300 may be provided, or at least two magnetic conductive members 300 may be provided, and the magnetic conductive members 300 extend to the outside of the coil 200 from different positions of the coil 200 relative to the outermost circle of the coil 200. In this way, the magnetic conductive members 300 respectively form different inclined magnetic field regions 800 in different orientations of the coil 200 through magnetic conduction, and the inclined magnetic field region 800 is enlarged, so that even if the electronic device is inclined relative to the external device 700 in different directions, a reliable communication connection between the electronic device and the external device 700 can be ensured.

In an embodiment, as shown in FIG. 11, two magnetic conductive members 300, a first magnetic conductive member 310 and a second magnetic conductive member 320, are provided, and a second magnetic conductive portion b of the first magnetic conductive member 310 and a second magnetic conductive portion b of the second magnetic conductive member 320 are respectively located on two sides of the coil 200 away from each other. Optionally, in the direction of the center line of the coil 200, both an orthographic projection of a first magnetic conductive portion a of the first magnetic conductive member 310 and an orthographic projection of a first magnetic conductive portion a of the second magnetic conductive member 320 are at least partially located in the orthographic projection of the hollow region 210. It can be learned with reference to FIG. 12 that, under the effect of the first magnetic conductive member 310 and the second magnetic conductive member 320, an inclined magnetic field regions 800 is respectively formed on the two sides of the coil 200 away from each other, and the inclined magnetic field region 800 is enlarged, so that even if the electronic device is inclined relative to the external device 700 in two opposite directions, a reliable communication connection between the electronic device and the external device 700 can be ensured. In addition, because the two inclined magnetic field regions 800 are far away from each other, there is no interaction between the two inclined magnetic field regions, and a large inclined magnetic field region 800 can be ensured generally.

In a further embodiment, in the direction of the center line of the coil 200, a part of the orthographic projection of the first magnetic conductive portion a of the first magnetic conductive member 310 and a part of the orthographic projection of the first magnetic conductive portion a of the second magnetic conductive member 320 are located within the orthographic projection of the hollow region 210. In addition, the sum of the areas of the orthographic projections of the first magnetic conductive portions a is half of the area of the orthographic projection of the hollow region 210. In this case, a large magnetic field strength of the inclined magnetic field region 800 can be ensured, and it can be avoided that large-area coverage of the coil 200 by the first magnetic conductive portion greatly affects the impedance of the coil 200.

In an optional embodiment, if the first magnetic conductive portion a of the first magnetic conductive member 310 is in contact with the second magnetic conductive portion b of the second magnetic conductive member 320, that is, no gap 330 is left between the first magnetic conductive portion a of the first magnetic conductive member 310 and the second magnetic conductive portion b of the second magnetic conductive member 320, the magnetic field in the central region of the coil 200 passes through the magnetic conductive member 300, and is interfered by the magnetic conductive member 300, affecting the magnetic field distribution and the magnetic field strength in the central region. Therefore, the inclined magnetic field region 800 formed after magnetic conduction of the magnetic conductive member 300 is affected, which does not facilitate the communication connection between the electronic device and the external device 700. Therefore, in an embodiment, the innermost circle of the coil 200 encloses the hollow region 210, the gap 330 exists between the first magnetic conductive portion a of the first magnetic conductive member 310 and the first magnetic conductive portion a of the second magnetic conductive member 320, and the gap 330 is opposite to the hollow region 210. In this case, the magnetic field in the central region of the coil 200 may pass through the gap 330, to prevent the magnetic field from directly passing through the first magnetic conductive portion a to be interfered by the first magnetic conductive portion a. Therefore, the magnetic field strength of the inclined magnetic field region 800 formed after magnetic conduction is ensured, which facilitates the communication connection between the electronic device and the external device 700.

In an optional embodiment, in the direction of the center line of the coil 200, the orthographic projection of the coil 200 is located in orthographic projections of all the magnetic conductive members 300, that is, the magnetic conductive members 300 cooperate to cover the entire coil 200. The magnetic conductive member 300 can guide more magnetic fields inside the coil 200 to the outside of the coil 200. In this way, a coverage area of each magnetic conductive member 300 is large, and impact on the coil 200 is also large. As a result, impedance changes of the coil 200 before and after loading the load are large, which is not beneficial to impedance stability. Therefore, in an embodiment, in the direction of the center line of the coil 200, a part of the orthographic projection of the coil 200 is located outside the orthographic projections of all the magnetic conductive members 300, that is, the magnetic conductive members 300 cooperate to cover a part of the coil 200. In this way, an excessively large coverage area of the magnetic conductive member 300 is avoided, and the impedance changes of the coil 200 before and after loading the load are maintained within a specific range, to ensure the impedance stability of the coil 200.

In an optional embodiment, the coil 200 has a first size in a first direction and a second size in a second direction, and the first size is greater than the second size. Therefore, the first direction is a direction in which a size of the coil 200 is relatively large. In this embodiment, an extension direction of the first magnetic conductive portion a may intersect the first direction, or the first magnetic conductive portion a extends along the first direction. Optionally, the coil 200 may be a rectangular coil, the first direction may be a length direction of the rectangular coil, the second direction is a width direction of the rectangular coil, and the first magnetic conductive portion a extends along the length direction of the rectangular coil. The coil 200 may alternatively be a circular coil. A structure of the coil 200 is not limited. Regardless of the structure of the coil 200, the first magnetic conductive portion a extends along the direction in which the size of the coil 200 is relatively large, which indicates that a size of the first magnetic conductive portion a in the first direction is large, so that more magnetic field can be guided, and more magnetic fields are guided to the outside of the coil 200, to form the inclined magnetic field region 800. Therefore, the magnetic field strength of the inclined magnetic field region 800 is increased, which facilitates the communication connection between the electronic device and the external device 700.

In an embodiment, in the first direction of the coil 200, two ends of the first magnetic conductive portion a are a first end and a second end respectively, and two ends of the second magnetic conductive portion b are a third end and a fourth end respectively. The first end and the third end may be offset, and the second end and the fourth end may also be offset. Optionally, in the first direction of the coil 200, an extension length of the first magnetic conductive portion a is greater than an extension length of the second magnetic conductive portion b. In this case, because the second magnetic conductive portion b corresponds to a small region, magnetic fields guided at some positions of the first magnetic conductive portion a are easily concentrated at a region of the second magnetic conductive portion b. Alternatively, in the first direction of the coil 200, an extension length of the first magnetic conductive portion a is less than an extension length of the second magnetic conductive portion b. In this case, because the second magnetic conductive portion b corresponds to a large region, it is difficult to form the inclined magnetic field region 800 in some regions of the second magnetic conductive portion b. In conclusion, in any case, offset causes poor magnetic field uniformity of the inclined magnetic field region 800. Therefore, in an embodiment, the first end is connected to and aligned with the third end, and the second end is connected to and aligned with the fourth end. Therefore, in the first direction of the coil 200, the extension length of the first magnetic conductive portion a is equal to the extension length of the second magnetic conductive portion b. In this case, regardless of the magnetic field guided at any position of the first magnetic conductive portion a, the magnetic field can be guided to a corresponding region of the second magnetic conductive portion b, to form the inclined magnetic field region 800, so that the magnetic field uniformity of the inclined magnetic field region 800 is improved.

In this embodiment, the coil 200 is a rectangular structure. The coil 200 includes two transverse extensions and two longitudinal extensions. The two transverse extensions are parallel, the two longitudinal extensions are parallel, and the two transverse extensions are connected to the two longitudinal extensions end to end in sequence, to form the rectangular structure. An extension direction of the longitudinal extension is a length direction of the coil 200, that is, the first magnetic conductive portion a extends in the extension direction of the longitudinal extension. In addition, the first end and the second end of the first magnetic conductive portion a are respectively aligned with inner sides of the two transverse extensions, and the third end and the fourth end of the second magnetic conductive portion b are also respectively aligned with the inner sides of the two transverse extensions. In this way, in the length direction of the coil 200, the first magnetic conductive portion a can cover the hollow region 210 to a large extent. Therefore, the first magnetic conductive portion a can further guide more magnetic fields, and guide more magnetic fields to the outside of the coil 200, to form the inclined magnetic field region 800. Therefore, the magnetic field strength of the inclined magnetic field region 800 is increased, which facilitates the communication connection between the electronic device and the external device 700.

In this solution, as shown in FIG. 3, the electronic device further includes a substrate 400 and a shielding member 500, the substrate 400 and the shielding member 500 are both disposed on the device body 100, that is, the substrate 400 and the shielding member 500 are mounted on the device body 100, the substrate 400 has a first surface and a second surface opposite to each other, the coil 200 is disposed on the first surface of the substrate 400, the shielding member 500 is disposed on the second surface of the substrate 400, and the magnetic conductive member 300 is located on one side of the coil 200 away from the substrate 400. In some embodiments, the substrate 400 may be a main board, and the main board is electrically connected to the coil 200, so that the main board supplies power to the coil 200. The shielding member 500 may be a ferrite film, and under the effect of the shielding member 500, other components of the device body 100 are prevented from affecting the coil 200. The substrate 400 provides a mounting base for the coil 200 and the magnetic conductive member 300, and the shielding member 500 shields the coil 200 from external impact, to create a suitable operating environment for the coil 200.

In an optional embodiment, as shown in FIG. 4, the electronic device further includes a camera 600, the camera 600 is disposed on a top of the device body 100, the camera 600 and the second magnetic conductive portion b are arranged along a third direction, and the third direction is perpendicular to an arrangement direction of the first magnetic conductive portion a and the second magnetic conductive portion b. Optionally, the arrangement direction of the first magnetic conductive portion a and the second magnetic conductive portion b may be the foregoing second direction, and the third direction may be the foregoing first direction. When the coil 200 is a rectangular coil, the arrangement direction of the first magnetic conductive portion a and the second magnetic conductive portion b is a width direction of the rectangular coil, and the third direction is a length direction of the rectangular coil. Both the magnetic conductive member 300 and the camera 600 are located on the top of the device body 100. In this way, the camera 600 is disposed adjacent to the second magnetic conductive portion b, to avoid a conflict between an arrangement position of the camera 600 and an arrangement position of the magnetic conductive member 300, and the camera 600 and the magnetic conductive member 300 do not easily affect each other. In addition, photographing performance of the camera 600 and magnetic conduction performance of the magnetic conductive member 300 are ensured.

The electronic device disclosed in the embodiments of the present invention may be a smartphone, a tablet computer, an e-book reader, or a wearable device. Certainly, the electronic device may alternatively be another device. This is not limited in the embodiments of the present invention.

The embodiments of this application are described above with reference to the accompanying drawings. However, this application is not limited to the foregoing specific implementations. The foregoing specific implementations are illustrative instead of imitative. Enlightened by this application, a person of ordinary skill in the art can make many encloses without departing from the idea of this application and the scope of protection of the claims. All of the encloses fall within the protection of this application.

## Claims

1. An electronic device, comprising a device body (100), a coil (200) and a magnetic conductive member (300), wherein the coil (200) and the magnetic conductive member (300) are both disposed on the device body (100), the magnetic conductive member (300) comprises a first magnetic conductive portion (a) and a second magnetic conductive portion (b) that are connected, an orthographic projection of the first magnetic conductive portion (a) at least partially overlaps with an orthographic projection of the coil (200) in a direction of a center line of the coil (200), and the second magnetic conductive portion (b) extends out relative to an outermost circle of the coil (200).

2. The electronic device according to claim 1, wherein the first magnetic conductive portion (a) is in contact with the coil (200).

3. The electronic device according to claim 1, wherein an innermost circle of the coil (200) encloses a hollow region (210), and the orthographic projection of the first magnetic conductive portion (a) is at least partially located in an orthographic projection of the hollow region (210) in the direction of the center line of the coil (200).

4. The electronic device according to claim 3, wherein the first magnetic conductive portion (a) is provided with a protrusion portion (c), and the protrusion portion (c) extends into the hollow region (210).

5. The electronic device according to claim 1, wherein two magnetic conductive members (300), a first magnetic conductive member (310) and a second magnetic conductive member (320), are provided, and the second magnetic conductive portion (b) of the first magnetic conductive member (310) and the second magnetic conductive portion (b) of the second magnetic conductive member (320) are respectively located on two sides of the coil (200) away from each other.

6. The electronic device according to claim 5, wherein an innermost circle of the coil (200) encloses a hollow region (210), a gap (330) is defined between the first magnetic conductive portion (a) of the first magnetic conductive member (310) and the first magnetic conductive portion (a) of the second magnetic conductive member (320), and the gap (330) is opposite to the hollow region (210).

7. The electronic device according to claim 1, wherein a part of the orthographic projection of the coil (200) is located outside orthographic projections of all the magnetic conductive members (300) in the direction of the center line of the coil (200).

8. The electronic device according to claim 1, wherein the coil (200) has a first size in a first direction and a second size in a second direction, the first size is greater than the second size, and the first magnetic conductive portion (a) extends along the first direction.

9. The electronic device according to claim 8, wherein in the first direction, two ends of the first magnetic conductive portion (a) are a first end and a second end respectively, two ends of the second magnetic conductive portion (b) are a third end and a fourth end respectively, the first end is connected to and aligned with the third end, and the second end is connected to and aligned with the fourth end.

10. The electronic device according to claim 1, wherein the electronic device further comprises a substrate (400) and a shielding member (500), the substrate (400) and the shielding member (500) are both disposed on the device body (100), the substrate (400) has a first surface and a second surface opposite to each other, the coil (200) is disposed on the first surface of the substrate (400), the shielding member (500) is disposed on the second surface of the substrate (400), and the magnetic conductive member (300) is located on one side of the coil (200) away from the substrate (400).

11. The electronic device according to claim 1, wherein the electronic device further comprises a camera (600), the camera (600) is disposed on a top of the device body (100), the camera (600) and the second magnetic conductive portion (b) are arranged along a third direction, and the third direction is perpendicular to an arrangement direction of the first magnetic conductive portion (a) and the second magnetic conductive portion (b).
